# EUROPÄISCHE PATENTSCHRIFT

(11) **EP 1 563 120 B1**
(45) Veröffentlichungstag und Bekanntmachung des Hinweises auf die Patenterteilung: **01.07.2009**
(21) Anmeldenummer: 02787663.0
(22) Anmeldetag: 12.11.2002
(51) Int. Cl.: C25D 13/12, C25D 13/22, B62D 29/00

(54) **VERFAHREN ZUM KORROSIONSSCHUTZ EINER FAHRZEUGKAROSSERIE**
METHOD FOR PROTECTING A VEHICLE BODY FROM CORROSION
PROCEDE DE PROTECTION ANTICORROSION D'UNE CARROSSERIE AUTOMOBILE

(43) Veröffentlichungstag der Anmeldung: 17.08.2005
(73) Patentinhaber: List, Reinhard, 8010 Graz (AT)
(72) Erfinder: List, Reinhard, 8010 Graz (AT)
(74) Vertreter: Heinze, Ekkehard
(86) Internationale Anmeldenummer: PCT/EP2002/012665
(87) Internationale Veröffentlichungsnummer: WO 2004/044271

(56) Entgegenhaltungen:
- EP-A- 0 383 498
- EP-A- 0 453 777
- EP-A- 0 775 721
- EP-A- 1 123 957
- US-A- 6 114 004
- US-B1- 6 347 799
- PATENT ABSTRACTS OF JAPAN vol. 009, no. 153 (C-288), 27. Juni 1985 (1985-06-27) & JP 60 029479 A (SHIN NIPPON SEITETSU KK;OTHERS: 01), 14. Februar 1985 (1985-02-14)
- PATENT ABSTRACTS OF JAPAN vol. 009, no. 237 (C-305), 24. September 1985 (1985-09-24) & JP 60 096793 A (ISUZU JIDOSHA KK), 30. Mai 1985 (1985-05-30)

## Beschreibung

Die Erfindung betrifft ein Verfahren zum Korrosionsschutz einer Fahrzeugkarosserie nach dem Oberbegriff des Anspruchs 1.

Der Korrosionsschutz der Karosserie ist im Fahrzeugbau, Insbesondere der Pkw-Produktion, seit Jahrzehnten ein Gegenstand intensiver Entwicklungsarbeit und ständiger Verbesserungen. Der hierbei erreichte Stand ist derart überzeugend, dass die meisten großen Automobilhersteller langjährige Garantien gegen Durchrostung der Karosserie geben können.

Ein wesentlicher Baustein des Korrosionsschutzes einer Fahrzeugkarosserie ist - neben der Verzinkung wesentlicher oder sämtlicher Teile und einer hochwertigen abschließenden Lackierung - das Durchlaufen eines Korrosionsschutz-Tauchbades, üblicherweise bezeichnet als KTL. Hierbei werden praktisch sämtliche Blechoberflächen mit einer hochwirksamen Korrosionsschutzschicht benetzt, die beim Herausführen der Karosserie aus dem Bad fest anhaftet.

Wie die gesamte Fertigung eines modernen Personenkraftwagens, ist auch der Korrosionsschutz ein inzwischen hochgradig automatisierter Ablauf, in dem für manuell ausgeführte Korrosionsschutzmaßnahmen aus Kostengründen kaum noch Platz ist. Es gibt jedoch auch derzeit hoch Bereiche von Fahrzeugkarosserlen, die aufgrund von dort vorhandenen Schweißpunkten oder -nähten und/oder aufgrund einer für den Angriff korrodierender Medien im Gebrauch des Fahrzeuges besonders exponierten Lage in außerordentlichem Maße korrosionsgefährdet sind und daher beim heutigen Stand der Technologie einer manuellen Korrosionsschutzbehandlung unterzogen werden.

Zu diesen Bereichen gehört die Federbeinabstützung, auch bezeichnet als Federbeindom. Hier gibt es üblicherweise einen Ringspalt zwischen einem sogenannten Außendom und Innendom, aus denen die Federbeinabstützung mit einer Mehrzahl von Punktschweißungen zusammengesetzt ist. Dieser Bereich wird, eingebettet In den Lackierprozess, manuell mit PVC-Spritzmasse oder einer streichfähigen dicken Korrosionsschutzschicht versehen.

Dieses Vorgehen ist (im Gesamtrahmen einer hoch automatisierten Fertigung) vergleichsweise ineffizient und kostenträchtig. Es muss zudem bei der Konstruktion der Fahrzeugkarosserie berücksichtigt werden, d.h. der auf diese Weise zu schützende Bereich muss während des Lackierprozesses, also nach Einbau wesentlicher Fahrzeugkomponenten In die Karosserie, für eine manuelle Behandlung noch hinreichend zugänglich sein.

Auch an anderen Stellen einer Fahrzeugkarosserie, etwa im Bereich zwischen Dachspriegel und Fahrzeugdach oder an Blechkanten bzw. Flanschen der Türen, Heckklappe und Motorhaube, gibt es Bereiche, für die ein zusätzlicher Korrosionsschutz sinnvoll ist, aber nach dem Stand der Technik nur durch manuelles Aufbringen eines Korrosionsschutzmittels bewirkt werden kann. Ebenso wie entsprechende Maßnahme im Bereich des Federbeindomes, sind auch solche Korrosionsschutzmaßnahmen mit erhöhtem Personal- und damit Kostenaufwand verbunden. Hinzu kommt, dass die entsprechenden Bereiche teilweise für den späteren Nutzer des Fahrzeuges sichtbar sind und die manuell durchgeführten Korrosionsschutzmaßnahmen keinen überzeugenden optischen Eindruck hinterlassen. In den letztgenannten Bereichen einer Fahrzeugkarosserie ist neben dem Korrosionsschutz auch eine Unterfütterung von Außenflächen gegenüber tragenden Bereichen (beispielsweise Dachhaut gegenüber Dachspriegel) erforderlich, die derzeit in der Regel durch manuellen Auftrag einer pastösen Masse erfolgt. Dem haften die gleichen Nachteile an wie manuellen Korrosionsschutzmaßnahmen.

Verfahren zum Korrosionsschutz mittels aufschäumbarer Materialien sind u.a. aus JP60029479A, US-B1-6347799, EP-A-0383498 oder EP-A-1123957 und Verfahren unter Einsatz eines Bauelementes mit einer aufschäumbaren Schicht auf einen Träger aus US-A-6114004, EP-A-0453777 bekannt.

Der Erfindung liegt daher die Aufgabe zugrunde, ein verbessertes Korrosionsschutz verfahren anzugeben, welches insbesondere kostengünstiger ist und keine unerwünschten Limitierungen für die Konstruktion der Fahrzeugkarosserie mit sich bringt.

Diese Aufgabe wird durch ein Verfahren mit den Merkmalen des Anspruchs 1 gelöst.

Die Erfindung schließt den grundlegenden Gedanken ein, den für besonders korrosionsgefährdete Bereiche erforderlichen zusätzlichen Schutz durch ein vorgefertigtes, sehr schnell und einfach handhabbares Korrosionsschutzelement zu bewirken. Sie schließt weiter den Gedanken ein, den entsprechenden Handhabungsschritt aus dem Produktionsabschnitt der Endlackierung - wo die fraglichen Bereiche aufgrund konstruktiver Gegebenheiten u.U. nicht mehr ohne weiteres zugänglich sind - In einen früheren Abschnitt des Produktionsverfahrens zu verlegen.

Des weiteren gehört zur Erfindung der Gedanke, diesen Schritt vor dem Schritt der Korrosionsschutz-Tauchlacklerung einzufügen. Dies impliziert die Bereitstellung eines die retativ hohen Temperaturen im Korrosionsschutz-Tauchbad überstehenden und im Ergebnis dieses Prozessschrittes fest am entsprechenden Karosserieabschnitt haftenden Korrosionsschutzelementes..

Im Ergebnis dieser Überlegungen wird vorgeschlagen, den ringförmigen Karosseriebereich zwischen Innen- und Aussendom einer Federbeinabstützung, der aufgrund einer konstruktiv gegebenen Begrenzungsflächenkonstellation einem im Verfahrensablauf expandierenden Bauelement (Korrosionsschutzelement) ausreichenden Widerstand entgegensetzen kann, vor dem Einbringen der Karosserie in das Tauchbad mit einem Bauelement zu versehen, welches im KTL-Bad expandiert. Durch die Expansion in der erwähnten Begrenzungsflächenkonstellation "verpresst" sich das Korrosionsschutzelement selbsttätig in dem zu schützenden Bereich. Es ist nach Verlassen des Tauchbades dort mechanisch sicher fixiert und schließt diesen Bereich nach außen, also gegen korrodierende Einflüsse, sicher ab.

Erfindungsgemäß kommen aufgrund der üblichen Verweildauern in einem KTL-Bad (15 min oder mehr) relativ langsam aufschäumende Materialien für das Korrosionsschutzelement in Betracht.

Erfindungsdgemäß wird ein Korrosionsschutzelement mit einem bei der erhöhten Temperatur aufschäumenden und sich bei Abkühlung im aufgeschäumten Zustand verfestigenden Abschnitt eingesetzt. Erfindungsgemäß wird ein Korrosionsschutzelement mit einer heiß aufschäumenden EVA-Schicht auf einem temperaturbeständigen Träger, insbesondere aus einem Polyamid, eingesetzt. Derartige Compounds sind kommerziell verfügbar und relativ kostengünstig und können mit einfachen Werkzeugen in eine an den zu schützenden Karosseriebereich angepasste Form gebracht werden.

Erfindungsgemäß wird als korrosionsgefährdeter Bereich ein Ringspalt zwischen einem Innen- und Außendom einer Federbeinabstützung mit einem ringförmigen Korrosionsschutzelement versehen. In dieser Anwendung ermöglicht das Verfahren insbesondere einen wirkungsvollen Korrosionsschutz der Federbeinabstützung auch bei einer Fahrzeugkonstruktion, bei der dieser Bereich in dem Prozessabschnitt der Endlackierung durch Einbauteile ganz oder teilweise verdeckt und deshalb für eine manuelle Nachbehandlung nicht mehr zugänglich ist.

Erfindungsgemäß kommt die Grundform eines Ringes (insbesondere Kreisringes, für Spezialfälle aber auch in elliptischer, ovaler oder noch komplexerer, beispielsweise 8-förmiger Gestalt) zur Anwendung.

Insgesamt ergeben sich als Vorteile des vorgeschlagenen Verfahrens und Korrostonsschutzelementes In seinen bevorzugten Ausführungen der zeit- und kostensparende Fortfall manueller Korrosionsschutzmaßnahmen, die Erreichung einer höheren optischen Produktqualität durch Fortfall von "unsauber" erscheinenden Bereichen, eine Erhöhung der Prozesssicherheit durch Fortfall undefinierter Prozesssituationen infolge manueller Eingriffe (Unsicherheit der manuellen Korrosionsschutzmaßnahme, schwer vorhersehbarer Dichtmassenverbrauch, schwankende Produktanmutung) und nicht zuletzt eine Verbesserung der Umweitverträglichkeit durch den Verzicht auf PVC-basierte Korrosionsschutz- bzw. Dicht- und Unterfütterungsmittel.

In einer besonders zweckmäßigen, zuverlässig am zu schützenden Karosseriebereich fixierbaren und leicht zu handhabenden Ausführung ist das Korrosionsschutzelement im Ausgangszustand mit einem Fortsatz oder Fortsätzen zur Fixierung im korrosionsgefährdeten Bereich versehen. Als solche Fortsätze, die insbesondere aus einem Träger (etwa dem weiter oben angesprochenen Polyamid-Träger) ausgeformt sind, sind insbesondere ein lippenförmiger Abschnitt oder eine Mehrzahl von Füßchen vorgesehen, die aufgrund ihrer Form und Abmessungen eine gewisse Elastizität aufweisen. Sie sind so an die Geometrie des zu schützenden Karosseriebereiches angepasst, dass sie sich dort im nicht-expandierten Ausgangszustand des Korrosionsschutzelementes sicher verhaken bzw. verklemmen.

Vorteile und Zweckmäßigkeiten der Erfindung ergeben sich im übrigen aus der nachfolgenden Beschreibung eines bevorzugten Ausführungsbeispiels anhand der Figuren. Von diesen zeigen:
- Fig. 1: eine skizzenartige perspektivische Darstellung eines Federbeindomes mit eingesetztem Korrosionsschutzelement einer ersten Ausführungsform,
- Fig. 2A und 2B: eine partielle Querschnittsdarstellung der Anordnung nach Fig. 1 bzw. eine Querschnittsdarstellung des Korrosionsschutzelementes im Ausgangszustand,
- Fig. 3 und 4: partielle Querschnittsdarstellungen des in Fig. 2A gezeigten Bereiches mit modifizierten Korrosionsschutzelementent.

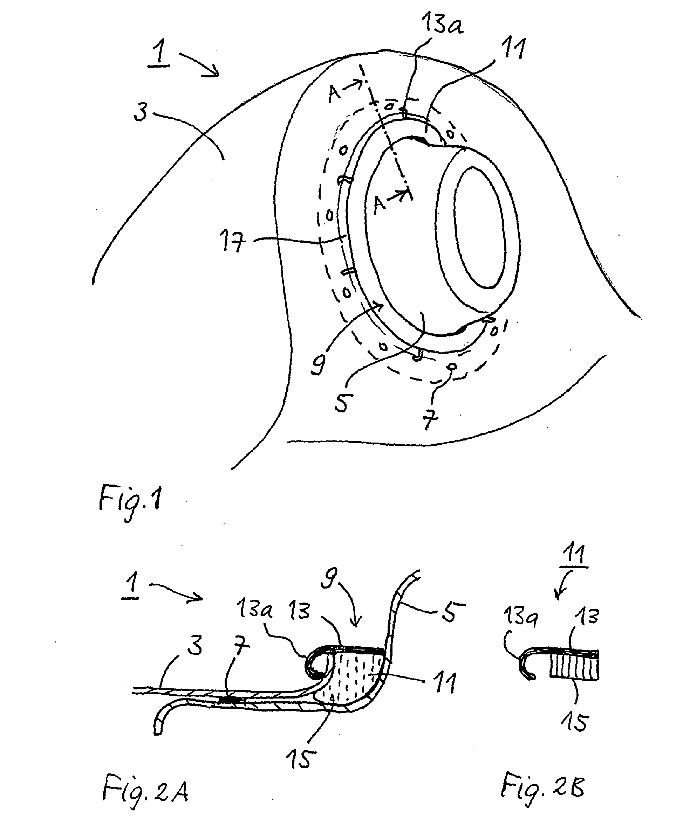

Die Figuren 1 und 2A zeigen einen Karosserieabschnitt 1 einer Pkw-Karosserie, der eine Federbeinabstützung für ein Federbein des Fahrzeuges bildet, in skizzenartiger perspektivischer Darstellung von oben bzw. einen Querschnitt längs einer Linie A-A hieraus. Die Federbeinabstützung 1 umfasst ein äußeres, haubenartiges erstes Blechteil 3, das auch als Außendom bezeichnet wird, und ein inneres, zweites Blechteil 5, das auch als Innendom bezeichnet wird. Außen- und Innendom 3 und 5 sind über ringförmig angeordnete Punktschweißungen 7 miteinander verbunden. Zwischen ihnen besteht ein Ringspalt 9, der erfindungsgemäß mit einem ebenfalls ringförmigen Korrosionsschutzelement 11 im Endzustand feuchtigkeitsdicht verschlossen ist.

Das Korrosionsschutzelement 11 ist als Compound mit einer PA66-Trägerschicht 13 und einer mit dieser fest verbundenen EVA-Schicht 15 ausgeführt. Es ist in Fig. 2A in seinem Endzustand nach Verlassen eines KTL-Bades bzw. in Fig. 2B in seinem Ausgangszustand gezeigt. In gleichen Winkelabständen hat es mehrere gekrümmte Fortsätze ("Füßchen") 13a, mit denen es einen aufstehenden Falz 17 des Außendomes 3 federnd übergreift.und sich im nicht-expandierten Ausgangszustand dort festhält.

Ansonsten liegt im nicht-expandierten Zustand das Korroslonsschutzelement 11 mit seitlichem Spiel im Ringspalt 9, so dass bei Einführung der Fahrzeugkarosserie in das KTL-Bad die Korrosionsschutzflüssigkeit des Bades an den Rändern des Korrosionsschutzelementesworbei in den Ringspalt eindringen und die Blechoberflächen des Außendomes 3 und Innendomes 5 auch dort - insbesondere auch in der Umgebung der Schweißpunkte 7 - bedecken und schützen kann. Im Tauchbad, das typisch eine Temperatur von über 150°C aufweist, expandiert die EVA-Schicht sowohl seitlich als auch in die Tiefe des Ringspaltes hinein bis zu den begrenzendes- Blechoberflächen von Außendom 3 und Innendom 5. Im Ergebnis ist es nicht mehr nur durch die Füßchen 13a, sondern großflächig durch die elastische Andruckkraft der aufgeschäumten EVA-Schicht 15 dort fixiert und schließt den Ringspalt feuchtigkeitsdicht ab.

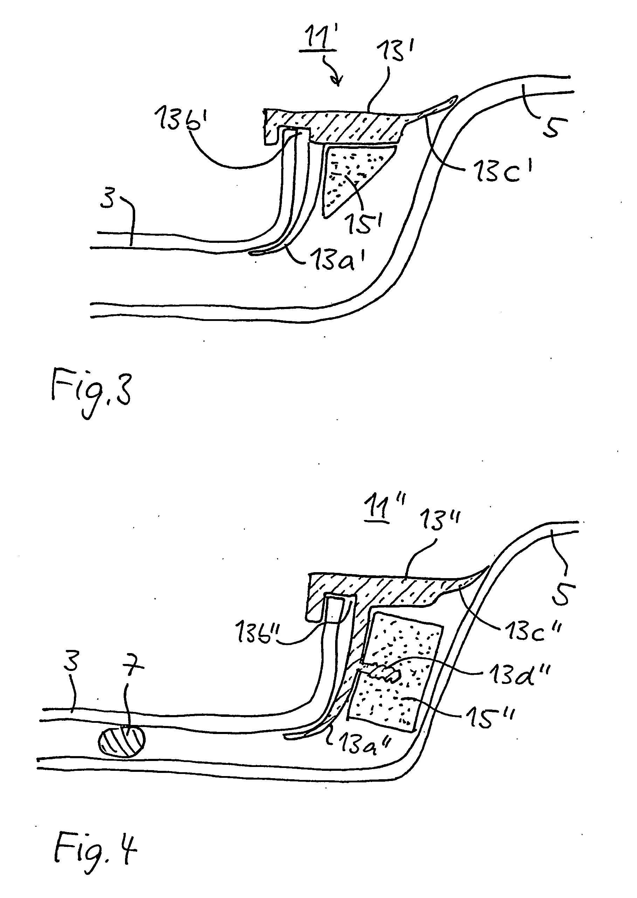

Fig. 3 und 4 zeigen die Einbausituation nach Fig. 2A mit modifizierten Korrosionsschutzelementen 11' bzw. 11".

Das Korrosionsschutzelement 11' nach Fig. 3 hat einen in der Draufsicht wiederum die Form eines Kreisringes aufweisenden Träger 13' mit innen und an der Unterseite angeordneten Klemmfüßchen 13a' zur Fixierung vor dem Punktschweißen und dem Einführen in das KTL-Bad. An die Unterseite ist auch hier ein expandierbarer EVA-Abschnitt 15' angeformt, der allerdings dreieckige Querschnittsform hat. Eine Ringnut 13b' an der Unterseite des Trägers 13' dient zum Aufpassen auf den aufstehenden Abschnitt des Außendomes 3, und eine an der Innenkante vorgesehene, leicht nach oben gebogene Dichtlippe 13c' dient dazu, den Ringspalt zwischen Innen- und Außendom 3, 5 auch bei Vorliegen bestimmter Fertigungstoleranzen optisch einwandfrei abzudecken. Die Lippe 13c' bietet aufgrund ihrer Elastizität einen gewissen zusätzlichen Ausdehnungsraum für den im KTL-Bad aufschäumenden EVA-Abschnitt 15', verhindert aber zugleich eine Verschlechterung der äußeren Anmutung durch überquellenden Schaum.

Bei dem weiter modifizierten Korrosionsschutzelement 11" nach Fig. 4 wird weitgehend der gleiche Träger eingesetzt wie beim Bauelement 11' nach Fig. 3. Insoweit wird dieser hier nicht weiter beschrieben. Der einzige Unterschied besteht darin, dass an den Füßchen 13a" senkrecht abstehende Fortsätze 13d" angeformt sind, die einen im Querschnitt rechteckigen Aufschäum-Abschnitt 15" am Träger 13" fixieren.

## Patentansprüche

1. Verfahren zum Korrosionsschutz eines Bereiches einer Fahrzeugkarosserie, wobei
ein Spalt- bzw. ringförmiger Öffnungs-Bereich der Fahrzeugkarosserie mit einem an die Form dieses Bereiches angepassten Bauelement versehen wird, welches einen bei einer vorbestimmten erhöhten Temperatur im Bereich zwischen 150 und 180°C expandierenden und bei Normaltemperatur anschließend im expandierten Zustand verbleibenden Abschnitt aufweist und derart geformt ist, dass es im Ausgangszustand in den spalt- bzw. ringförmig Öffnungs-Bereich eingesetzt werden kann und diesen nach dem Aufschäumen ausfüllt und nach außen feuchtigkeitsdicht abschließt, und
nach dem Anbringen des Bauelementes mindestens der hiermit versehene Bereich der Fahrzeugkarosserie einer Erwärmung auf mindestens die Expansionstemperatur des expandierenden Abschnittes unterzogen und für eine zur hinreichenden Expansion ausreichende Zeitspanne im erwärmten Zustand gehalten wird,
**dadurch gekennzeichnet, dass**
als korrosionsgefährdeter Bereich ein Ringspalt zwischen einem Innen- und Außendom einer Federbeinabstützung mit einem ringförmigen Bauelement mit seitlichem Spiel versehen und durch Expansion desselben dicht verschlossen wird, wobei ein mit einer heiß aufschäumenden EVA-Schicht auf einem temperaturbeständigen Träger und mit Mitteln zur Montage-Fixierung im korrosionsgefährdeten Bereich im Ausgangszustand versehenes Bauelement eingesetzt wird und die Erwärmung dadurch erfolgt, dass die Fahrzeugkarosserie in ein Korrosionsschutz-Tauchbad mit der erhöhtem Temperatur im Bereich zwischen 150 und 180°C verbracht wird.

## Claims

1. A method of corrosion-protecting an area of a vehicle body, wherein
a gap-shaped or ring-shaped opening area of the vehicle body is provided with a component adapted to the shape of said area, which component comprises a portion expanding at a predetermined increased temperature of between 150°C and 180°C and subsequently remaining in the expanded state at normal temperature and being shaped such that, in the initial state, it may be inserted into the gap-shaped or ring-shaped opening area and, after foaming, fills and seals the same against the outside in a moisture-tight manner, and
following the placement of the component, at least the area of the vehicle body provided with the same is subjected to a heating to at least the expansion temperature of the expanding portion and is kept in the heated state for a period of time sufficient for an adequate expansion,
**characterized in that**
as an area susceptible to corrosion, an annular gap between an inner and an outer dome of a suspension strut support is provided with a ring-shaped component having lateral clearance, and is tightly sealed by expansion of the same, wherein a component is inserted, which in the initial state has a hot-foaming EVA layer on a temperature-resistant carrier and means for fixing when mounted in the area susceptible to corrosion state, and
the heating is performed **in that** the vehicle body is immersed in a corrosion-protection dipping bath having the increased temperature in the range of between 150°C and 180°C.

## Revendications

1. Procédé de protection anticorrosion d'une zone de carrosserie de véhicule,
une zone d'ouverture en forme de fente ou d'anneau de la carrosserie de véhicule étant pourvue d'un composant adapté à la forme de cette zone, doté d'une section se dilatant sous l'effet d'une température augmentée prédéterminée comprise entre 150 et 180°C et conservant ensuite son état dilaté à la température normale, et formé de façon à pouvoir être inséré à l'état initial dans la zone d'ouverture en forme de fente ou d'anneau et à remplir celle-ci après moussage et à la fermer de façon étanche à l'humidité par rapport à l'extérieur, et,
après la pose du composant, au moins la zone de carrosserie de véhicule qui en est pourvue étant soumise à un échauffement à au moins la température de dilatation de la section se dilatant et étant maintenue à l'état chauffé pendant une durée suffisante pour assurer une dilatation adéquate,
**caractérisé en ce que**
une fente annulaire entre un dôme intérieur et un dôme extérieur d'un support de jambe de force est pourvue, en tant que zone en danger de corrosion, d'un composant en forme d'anneau présentant un jeu latéral et **en ce qu'**elle se ferme de manière étanche sous l'effet de la dilatation de celui-ci, un composant pourvu à l'état initial d'une couche EVA à moussage à chaud sur un support thermorésistant et de moyens de fixation au montage dans la zone en danger de corrosion étant inséré, et **en ce que**
l'échauffement est réalisé **en ce que** la carrosserie du véhicule est immergée dans un bain d'immersion de protection anticorrosion à la température augmentée comprise entre 150 et 180°C.
